# EUROPEAN PATENT APPLICATION

(11) **EP 4 800 443 A1**
(43) Date of publication of application: **02.09.2026**
(21) Application number: 26157826.4
(22) Date of filing: 11.02.2026
(51) Int. Cl.: G02B 5/124, G02B 27/14, G02B 30/56, G02B 30/60, G02B 5/122

(54) **OPTICAL ELEMENT, DISPLAY APPARATUS, AND DISPLAY METHOD**

(30) Priority: 26.02.2025 JP 2025028568; 11.11.2025 JP 2025190302
(71) Applicant: Alps Alpine Co., Ltd., Ota-ku, Tokyo 145-8501 (JP)
(72) Inventor: Ashimine, Katsunari, Iwaki-city, Fukushima (JP)
(74) Representative: Schmitt-Nilson Schraud Waibel Wohlfrom Patentanwälte Partnerschaft mbB

(57) **Abstract**

A display apparatus capable of displaying an aerial image by utilizing retroreflection is provided. The display apparatus includes a light source; a retroreflective member; and an optical element disposed at a position where light from the light source is incident, the optical element including a plurality of reflective areas formed via a plurality of slits. The plurality of reflective areas reflect the light from the light source toward the retroreflective member, and the plurality of slits transmit light retroreflected by the retroreflective member to form an aerial image.

## Description

The present application is based on and claims priority to Japanese Patent Application No. 2025-028568 filed on February 26, 2025, and Japanese Patent Application No. 2025-190302 filed on November 11, 2025.

The present disclosure relates to a display apparatus for displaying an aerial image by retroreflection, and more particularly to an optical element for forming an aerial image.

Aerial imaging by using retro-reflection (AIRR) is known. A display of an aerial image (or aerial video) by using retroreflection uses the principle in which light generated from a light source is reflected by a mirror in the direction of a retroreflecting member, and a part of the light that is emitted and returns to the mirror is transmitted to form an image again. Therefore, a half mirror with a reduced reflectance, a polarizing beam splitter, or the like is used as the mirror (for example, see Japanese Patent No. 7604079).

The present disclosure relates to a display apparatus, optical element, and method according to the appended claims. Embodiments are disclosed in the dependent claims.

A display apparatus according to an aspect of the present disclosure is capable of displaying an aerial image by utilizing retroreflection, and includes a light source, a retroreflective member, and an optical element disposed at a position where light from the light source is incident, the optical element including a plurality of reflective areas formed via a plurality of slits, wherein the plurality of reflective areas reflect the light from the light source toward the retroreflective member, and the plurality of slits transmit the light retroreflected by the retroreflective member to form the aerial image.

An optical element according to an aspect of the present disclosure forms an aerial image by using retroreflection, and the optical element includes a plurality of reflective areas formed via a plurality of slits.

A method for displaying an aerial image according to an aspect of the present disclosure includes preparing an optical element in which a plurality of reflective areas are formed via a plurality of slits, reflecting light incident from a light source toward a retroreflective member by the plurality of reflective areas, and transmitting the light retroreflected by the retroreflective member via the plurality of slits to form an aerial image.

According to a further aspect, a method for displaying an aerial image is provided, wherein an optical element is prepared, wherein a first plurality of reflective areas are formed on a first surface through a first plurality of slits, a second plurality of reflective areas are formed on a second surface opposite to the first surface through a second plurality of slits, and an arrangement pitch of the first plurality of reflective areas is equal to an arrangement pitch of the second plurality of reflective areas, wherein light incident from a light source is reflected by the first plurality of reflective areas toward a first retroreflective member, and light retroreflected by the first retroreflective member is transmitted through the first plurality of slits to form an aerial image, wherein light incident from the light source is transmitted through the first plurality of slits toward a second retroreflective member, and light retroreflected by the second retroreflective member is reflected by the second plurality of reflective areas to form an aerial image.
FIG. 1A is a diagram illustrating a schematic configuration of an existing display apparatus that displays an aerial image according to an embodiment;
FIG. 1B is a diagram illustrating another schematic configuration of the existing display apparatus that displays an aerial image according to an embodiment;
FIG. 2A is a diagram illustrating a schematic configuration of a display apparatus according to a first embodiment of the present disclosure;
FIG. 2B is a bottom view of a slit mirror as illustrated in FIG. 2A;
FIG. 2C is a cross-sectional view of the slit mirror as illustrated in FIG. 2B taken along a line A-A;
FIG. 3A is a diagram for explaining the principle of a display apparatus according to an embodiment;
FIG. 3B is a diagram for explaining reflection and transmission by a slit mirror according to an embodiment;
FIG. 4A is a diagram illustrating a schematic configuration of a display apparatus according to an embodiment;
FIG. 4B is a cross-sectional view of a slit mirror according to an embodiment;
FIG. 4C is a diagram for explaining generation of an aerial image in a display apparatus according to an embodiment;
FIG. 5A is a diagram illustrating an example of light utilization efficiency in a display apparatus having an existing structure according to an embodiment;
FIG. 5B is a diagram illustrating an example of the light utilization efficiency in a display apparatus according to an embodiment;
FIG. 6A is a diagram for explaining an enhancement of a display apparatus according to an embodiment;
FIG. 6B is a diagram illustrating a schematic configuration of a display apparatus according to an embodiment;
FIG. 7 is a diagram illustrating a schematic configuration of a display apparatus according to an embodiment;
FIG. 8A is a diagram for explaining retroreflection of a prismatic retroreflective element according to an embodiment;
FIG. 8B is a schematic plan view for explaining light utilization efficiency of a prismatic retroreflective element according to an embodiment;
FIG. 9A is a diagram for explaining retroreflection of a full-cube retroreflective element according to an embodiment;
FIG. 9B is a plan view of a full-cube retroreflective member according to an embodiment;
FIG. 9C is a diagram illustrating a relationship between incidence and emission of light with respect to a full-cube retroreflective member according to an embodiment;
FIG. 10 is a projection view of a slit mirror and a retroreflective member in a display apparatus according to an embodiment;
FIG. 11A is a diagram for explaining retroreflection of a full-cube retroreflective element according to an embodiment;
FIG. 11B is a projection diagram of a slit mirror and a retroreflective member in a display apparatus according to an embodiment; and
FIG. 12 is a projection view of a slit mirror and another retroreflective member in a display apparatus according to an embodiment.

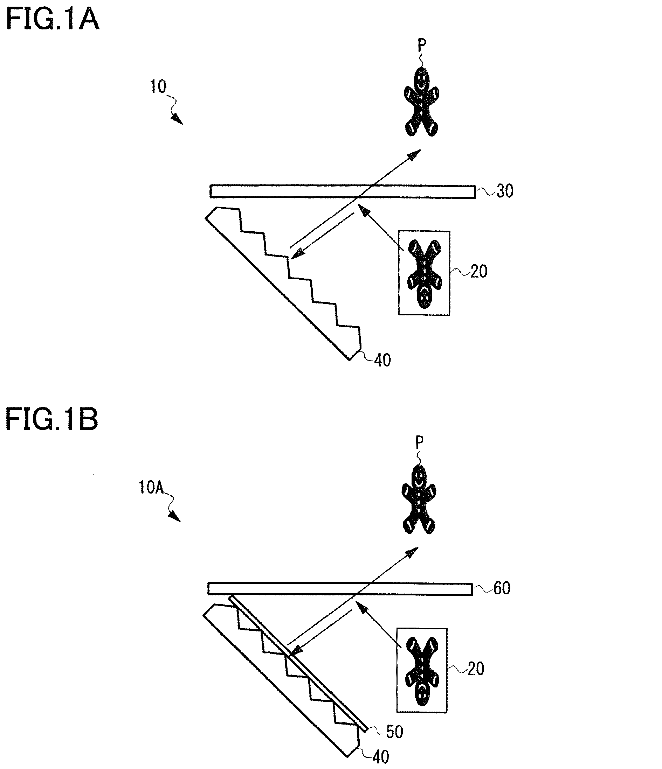

FIG. 1A is a diagram illustrating a schematic configuration of an existing display apparatus that displays an aerial image. A display apparatus 10 includes, for example, a display 20, a half mirror 30, and a retroreflective member 40 in a housing such as a casing.

The display 20 outputs an original image of an aerial image P, and the half mirror 30 reflects a part of the incident light of the original image toward the retroreflective member 40. The retroreflective member 40 reflects light in the same direction as the incident light, and the reflected light passes through the half mirror 30 to form the aerial image P. The imaging position of the aerial image P is symmetrical to the display 20 with respect to the principal plane of the half mirror 30.

In the above configuration, since the half mirror 30 is used as a mirror portion, for example, when the half mirror 30 is a mirror that reflects 50% of light, there is an issue that a loss of light occurs by passing the light through the half mirror 30 twice by reflection and transmission. Furthermore, there is an issue that light utilization efficiency of the light contributing to the formation of the aerial image P is lowered.

In order to solve the above issues, in a display apparatus 10A as illustrated in FIG. 1B, a λ/4 plate 50 configured to generate a retardation of λ/4 is disposed on the upper surface of the retroreflective member 40, and a polarizing beam splitter 60 is used instead of the half mirror 30. In this case, the polarizing beam splitter 60 reflects the light of the original image incident from the display 20 toward the λ/4 plate 50 and the retroreflective member 40, and aligns a polarization direction of the light emitted from the λ/4 plate 50 with a transmission axis of the polarizing beam splitter 60, thereby forming the aerial image P by the light transmitted through the polarizing beam splitter 60. However, the configuration that uses the polarizing beam splitter has an issue that the color of the aerial image changes depending on a viewing angle (color dispersion) due to the variation in characteristics depending on an incident angle and a wavelength of light.

The present disclosure has been made to address the above existing issues, and an object of the present disclosure is to provide an optical element, a display apparatus, and a display method that enhance the light utilization efficiency for forming an aerial image.

Next, embodiments of the present disclosure will be described. In the present embodiments, the display apparatus uses a slit mirror structure as an optical element, in which a plurality of reflective areas are formed in a stripe pattern with a plurality of slits arranged between the reflective areas for forming an aerial image. By using the slit mirror structure, it is possible to enhance the light utilization efficiency compared to the half mirror used in the existing technique, and it is possible to suppress chromatic dispersion compared to the polarizing beam splitter. It should be noted that the drawings referred to in the following description of the embodiments include exaggerated representations for easy understanding of the disclosure and do not represent the shape or scale of an actual product.

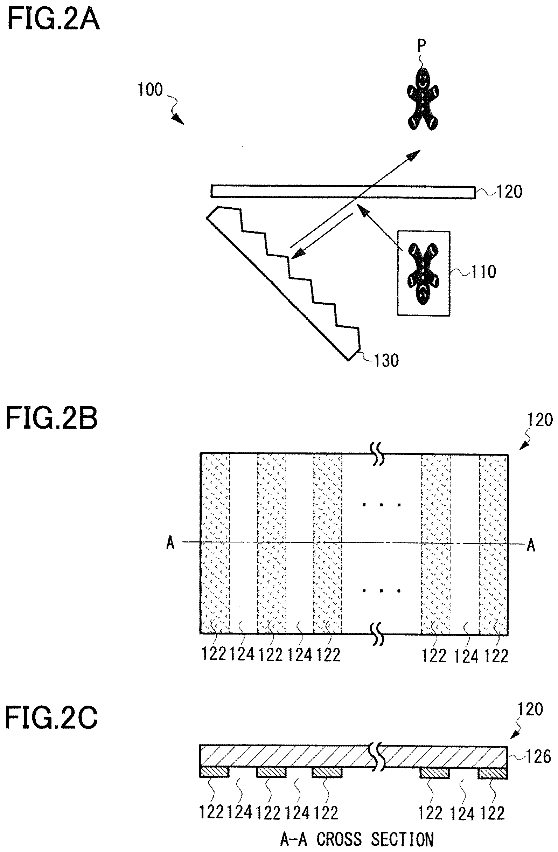

Next, examples of the present disclosure will be described in detail. FIG. 2A is a diagram illustrating a schematic configuration of a display apparatus according to a first embodiment of the present disclosure. A display apparatus 100 of the present embodiment includes a display 110, a slit mirror 120 in which a plurality of mirrors are formed in the stripe pattern formed via a plurality of slits arranged between the mirrors, and a retroreflective member 130. These members are disposed in a housing or a casing, for example, and display the aerial image P floating in the air from the housing.

The display 110 is a light source for generating an original image of the aerial image P. The display 110 is not particularly limited, but is, for example, a light emitting diode (LED) or organic electroluminescent (EL) display, a projector, an LED unit in which a plurality of LEDs are two-dimensionally arranged, or the like. The light of the original image of the aerial image P generated by the display 110 is output toward the slit mirror 120. For example, the angle formed by the normal (optical axis) to the display surface of the display 110 and the main surface of the slit mirror 120 is 45 degrees.

The slit mirror 120 is an optical element in which a plurality of slits and a plurality of mirrors are alternately arranged. The slit mirror 120 is disposed at a position where the light from the display 110 is incident, reflects the light from the display 110 toward the retroreflective member 130, and transmits the light reflected by the retroreflective member 130 to form the aerial image P.

FIG. 2B is a bottom view of the slit mirror, and FIG. 2C is a cross-sectional view taken along a line A-A in FIG. 2B. As illustrated in FIG. 2B, the slit mirror 120 has a substantially rectangular planar surface, and a plurality of elongated rectangular mirrors 122 extending in a column direction and a plurality of slits 124 formed between adjacent reflective areas of the plurality of mirrors 122 are formed on the slit mirror. The mirror 122 provides a reflective area and the slit 124 provides a light transmissive area.

In one aspect, as illustrated in FIG. 2C, the slit mirror 120 includes a transparent base member 126 in the form of a transparent film or plate capable of transmitting light, and a plurality of mirrors 122 are formed on the bottom surface of the transparent base member 126. The material of the transparent base member 126 is not particularly limited, and includes, for example, plastic, glass, acrylic, or the like. The mirror 122 is, for example, a metal layer, and may be formed by printing a metal layer on the surface of the transparent base member 126, or may be formed by etching a metal material deposited on the entire surface of the transparent base member 126. Areas of the transparent base member 126 not covered by the metal layer provide slits 124, i.e., light transmissive areas. The above-described mirror manufacturing method is an example, and the slit mirror 120 may be formed by a method other than the above-described method. In another aspect, the slit 124 may be a void formed in the transparent base member 126.

The retroreflective member 130 is an optical element that reflects light in the same direction as incident light, and the configuration of the retroreflective member 130 is not particularly limited. The retroreflective member 130 may include, for example, a triangular pyramidal retroreflective element, a full-cube corner retroreflective element, or the like. The retroreflective member 130 receives the light reflected by the mirrors 122 of the slit mirror 120 and reflects the light in the same direction as the incident light. The light (retroreflected light) retroreflected by the retroreflective member 130 is parallel to the incident light, and a certain offset occurs between the retroreflected light and the incident light as described in the following. The retroreflective member 130 is aligned with respect to the slit mirror 120 such that the retroreflected light passes through the slits 124 of the slit mirror 120. In this way, the aerial image P is formed by the retroreflected light transmitted through the slits 124 of the slit mirror 120.

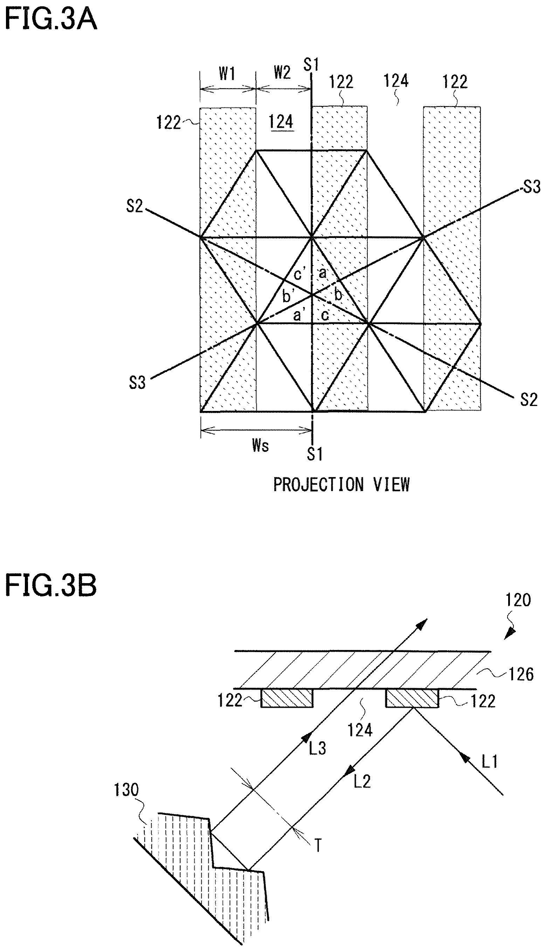

Next, an operation principle of a display apparatus 100 will be described. FIG. 3A is a projection view of the retroreflective member projected on the slit mirror and the two are viewed in an overlapping manner. The retroreflective member 130 includes a plurality of retroreflective units arranged in the row and column directions, and one retroreflective unit is formed of, for example, a retroreflective prism. The retroreflective prism includes three reflective surfaces, and incident light is internally reflected three times by the three reflective surfaces and emitted in the same direction as the incident light. At this time, a certain amount of offset is necessarily generated between the incident light and the emitted light (retroreflected light). The retroreflective member 130 has three axes (hereinafter referred to as "inversion axes") for generating outgoing light at positions symmetrical to the incident light.

For example, in the example of FIG. 3A, when one retroreflective unit is viewed from above, the retroreflective unit (retroreflective element) is represented by one equilateral triangle. The plurality of retroreflective units are arranged in a matrix such that the equilateral triangles are alternately inverted. Three bisectors extending from the vertices of the equilateral triangle toward the midpoint of the corresponding base are inversion axes S1, S2, and S3.

As illustrated in FIG. 3A, the light incident on "a" of the retroreflective unit is emitted from a position "a'" that is symmetrical with respect to the inversion axis S2, the light incident on "b" is emitted from a position "b'" that is symmetrical with respect to the inversion axis S1, and the light incident on "c" is emitted from a position "c'" that is symmetrical with respect to the inversion axis S3. The same applies to the opposite case (light incident on "a'" is emitted from "a", light incident on "b'" is emitted from "b", and light incident on "c'" is emitted from "c"). In this manner, the light incident on the retroreflective unit is emitted from the positions symmetrical with respect to the inversion axes S1, S2, and S3.

The retroreflective member 130 is positioned with respect to the slit mirror 120 such that one of the inversion axes S1, S2, or S3 is parallel to a row direction (slit direction) of the mirror 122. In the example of FIG. 3A, the retroreflective member 130 is disposed such that the inversion axis S1 is parallel to the slit direction of the slit mirror 120.

In a preferred embodiment, the arrangement pitch of the mirrors 122 and slits 124 of the slit mirror 120 in the row direction is set to be equal to the arrangement pitch of the retroreflective units in the row direction. In this case, a width W1 of the mirror 122 in the row direction is equal to a width W2 of the slit 124 in the row direction (W1 = W2), and a length Ws of one side of the equilateral triangle of the retroreflective unit is Ws = W1 + W2.

In another aspect, when the arrangement pitch of the mirrors 122 and the slits 124 in the row direction is equal to the arrangement pitch of the retroreflective units in the row direction, the width W1 of the mirrors may not be equal to the width W2 of the slits (W1 ≠ W2). For example, the amount of light reflected may be relatively increased by making W1 > W2, or conversely, the amount of light transmitted may be relatively increased by making W1 < W2. W1 and W2 may be set according to optical characteristics of the display apparatus.

FIG. 3B is a diagram schematically illustrating reflection and transmission by the slit mirror 120. As illustrated in FIG. 3B, light L1 from the display 110 is incident on the slit mirror 120, and the incident light L1 is separated into reflected light and transmitted light. The incident light L1 becomes light L2 which is reflected toward the retroreflective member 130 by the mirror 122, and the light L2 is retroreflected by the retroreflective member 130 in the same direction as the incident light. Retroreflected light L3 is retroreflected in the same direction as the incident light L2, but an offset T occurs between the incident light L2 and the retroreflected light L3, and thus the retroreflected light L3 passes through the slit 124 of the slit mirror 120 and forms the aerial image P.

In this way, the light emitted from the display 110 and reflected by the slit mirror 120 is returned with an offset (axial deviation) with respect to the inversion axis by the retroreflective member 130, and the returned light is transmitted through the slit 124 of the slit mirror 120 with almost no loss and contributes to the formation of the aerial image P.

The display apparatus as described herein has the following effects:
- As compared with an existing half mirror, the use of a slit mirror can greatly enhance light utilization efficiency of non-polarized light for forming a non-polarized aerial image. For example, when the light transmittance of the half mirror is 50%, the light utilization efficiency is doubled.
- A high-quality aerial image can be achieved without color dispersion (color variation when the angle is changed) that occurs when a display is used as a light source.
- A retroreflection system has an advantage that the degree of freedom of the optical layout is higher than that of other aerial image systems and various designs such as a viewing angle and a floating angle can be made. However, the weakest point of a retroreflection system with respect to other systems has been low efficiency in light utilization. According to the present embodiment, it is possible to achieve an aerial image (aerial display interface) with a small utilization loss of light and high competitiveness while coping with various applications and viewing angles.

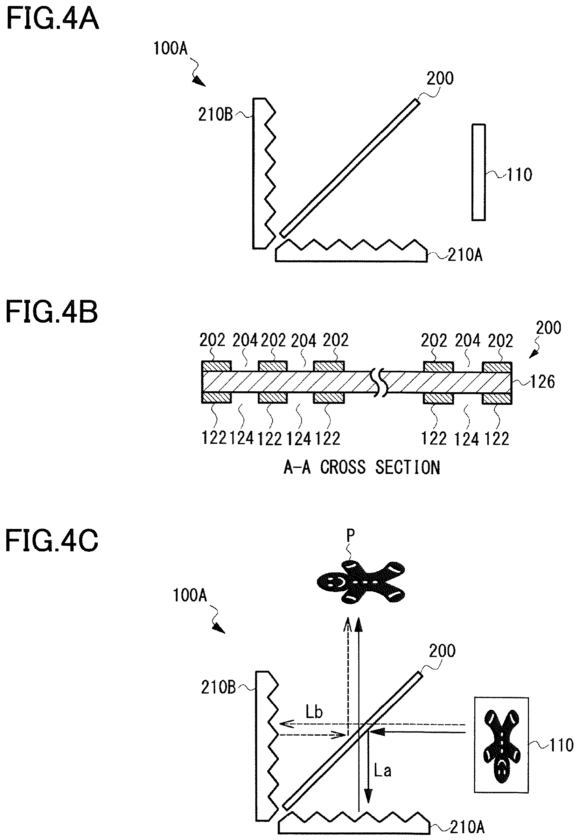

Next, a second embodiment of the present disclosure will be described. FIG. 4A is a diagram illustrating a schematic configuration of a display apparatus according to a second embodiment of the present disclosure, and the same reference numerals are given to the same configurations as those illustrated in FIG. 2A. A display apparatus 100A of the second embodiment includes a double-sided slit mirror 200 and first and second retroreflective members 210A and 210B.

The first and second retroreflective members 210A and 210B are configured in the same manner as the retroreflective member 130 of the first embodiment, and the first and second retroreflective members 210A and 210B have the same configuration. The first and second retroreflective members 210A and 210B are arranged such that their retroreflective surfaces are orthogonal to each other.

The double-sided slit mirror 200 is disposed on a diagonal line of the first and second retroreflective members 210A and 210B, that is, the double-sided slit mirror 200 is disposed at an angle of 45 degrees with respect to the main surfaces of the first and second retroreflective members 210A and 210B. The angle formed by the main surfaces of the double-sided slit mirror 200 and the normal (optical axis) to the display surface of the display 110 is 45 degrees.

FIG. 4B is a cross-sectional view of the double-sided slit mirror 200 according to the second embodiment. The cross section shown in FIG. 4B corresponds to the cross section taken along the line A-A in FIG. 2B. The double-sided slit mirror 200 includes a plurality of mirrors 202 and a plurality of slits 204 on an upper surface side in addition to the plurality of mirrors 122 and the plurality of slits 124 formed on a bottom surface side of the slit mirror 120 of the first embodiment. In a preferred embodiment, the arrangement pitch in the row direction of the mirrors 202 and the slits 204 formed on the upper surface side of the slit mirror 120 is equal to the arrangement pitch in the row direction of the mirrors 122 and the slits 124 formed on the bottom surface side of the slit mirror 120. The position of the mirror 202 is consistent with that of the mirror 122, and the position of the slit 204 is consistent with that of the slit 124. The transparent base member 126 exposed by the slit 124 and the slit 204 provides the light transmissive areas. In another aspect, the width of the mirrors 202 formed on the upper surface side in the row direction may be different from that of the mirrors 122 formed on the bottom surface side, and for example, the width of the mirrors 202 on the upper surface side may be slightly smaller than that of the mirrors 122 on the bottom surface side, or may be slightly larger than that of the mirrors 122 on the bottom surface side. The width of the mirrors 202 and the width of the mirrors 122 may be selected as appropriate in accordance with the optical characteristics of the display apparatus.

The column direction (slit direction) of the mirrors 122 on the bottom surface side of the double-sided slit mirror 200 is parallel to one of the inversion axes of the first retroreflective member 210A, and the arrangement pitch in the row direction of the mirrors 122 and the slits 124 is equal to an arrangement pitch in the row direction of the retroreflective units. The first retroreflective member 210A is then aligned with the double-sided slit mirror 200 such that the retroreflected light passes through the slits 124. The column direction (slit direction) of the mirrors 202 on the upper surface side of the double-sided slit mirror 200 is parallel to one of the inversion axes of the second retroreflective member 210B, and the arrangement pitch in the row direction of the mirrors 202 and the slits 204 is equal to the arrangement pitch in the row direction of the retroreflective units. The second retroreflective member 210B is then aligned with the double-sided slit mirror 200 to receive light from the display 110 that has passed through the slits 124, the transparent base member 126, and the slits 204, and to reflect the retroreflected light by the mirrors 202.

Next, an operation of a display apparatus 100A according to the second embodiment will be described with reference to FIG. 4C. Light emitted from the display 110 is incident on the bottom surface side of the double-sided slit mirror 200, and is separated into reflected light La that is reflected by the mirrors 202 and transmitted light Lb that passes through the slits 124, the transparent base member 126, and the slits 204. The axes of the light beams incident on the first and second retroreflective members 210A and 210B are offset by the amount of the inversion structure of the retroreflection, and the light beams are returned to the direction of the double-sided slit mirror 200.

That is, the light La reflected by the double-sided slit mirror 200 becomes retroreflected light offset by the first retroreflective member 210A, and the retroreflected light passes through the slits 124 of the double-sided slit mirror 200 to form the aerial image P. In contrast to this, the light Lb transmitted through the double-sided slit mirror 200 becomes retroreflected light offset by the second retroreflective member 210B, and the retroreflected light is reflected by the mirrors 202 on the upper surface side of the double-sided slit mirror 200 to form the aerial image P. In this way, the light transmitted through the double-sided slit mirror 200 is made to contribute to the formation of the aerial image P, whereby the light utilization efficiency can be further enhanced as compared with the first embodiment.

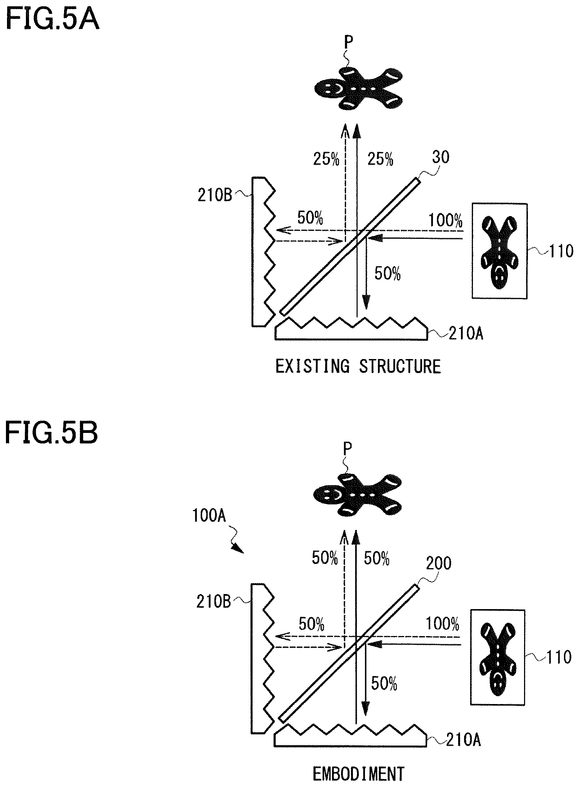

FIG. 5A is a diagram illustrating an example of light utilization efficiency when a half mirror is used. FIG. 5B is a diagram illustrating an example of light utilization efficiency when the double-sided slit mirror 200 according to the second embodiment is used. In the existing structure as illustrated in FIG. 5A, assuming that the light transmittance of the half mirror 30 is 50% and the light reflectance is 50%, the light emitted from the display 110 is separated into 50% of reflected light and 50% of transmitted light by the half mirror 30. Fifty percent of the light emitted from the display 110 is retroreflected by the first retroreflective member 210A, and a part of the retroreflected light is transmitted through the half mirror 30, and half, that is, 25% of the light, contributes to the formation of the aerial image P. In addition, 50% of the transmitted light transmitted through the half mirror 30 is retroreflected by the second retroreflective member 210B, a part of the retroreflected light is reflected by the half mirror 30, and 25% of the light, which is half of the retroreflected light, contributes to the formation of the aerial image P. Therefore, in the case of using the half mirror 30, the light utilization efficiency in an ideal state where there is no transmission loss or reflection loss is 50% (25% + 25%) at the maximum.

In contrast to this, in the display apparatus 100A of the embodiment as illustrated in FIG. 5B, light emitted from the display 110 is separated into reflection light and transmission light by the double-sided slit mirror 200. When the width W1 of the mirrors 122 and the width W2 of the slits 124 are equal, 50% of the light emitted from the display 110 is retroreflected by the first retroreflective member 210A, and the light retroreflected by the first retroreflective member 210A passes through the slits 124, the transparent base member 126, and the slits 204 of the double-sided slit mirror 200. At this time, since light loss as in a half mirror does not occur, 50% of the light contributes to the formation of the aerial image P. Furthermore, 50% of the transmitted light transmitted through the double-sided slit mirror 200 is retroreflected by the second retroreflective member 210B, and the retroreflected light is reflected by the mirrors 202 of the double-sided slit mirror 200, such that 50% of the light contributes to the formation of the aerial image P. The light utilization efficiency in an ideal state where there is no transmission loss or reflection loss due to the double-sided slit mirror 200 is close to 100% (50% + 50%) in principle. In this way, by using the double-sided slit mirror, it is possible to significantly enhance the light utilization efficiency of the light emitted from the display 110 for formation of the aerial image P as compared with the existing structure, and as a result, it is possible to display the aerial image P with high luminance.

In the above example, the double-sided slit mirror 200 is disposed at 45 degrees with respect to the first and second retroreflective members 210A and 210B disposed to form an angle of 90 degrees in combination, but as a modification, the double-sided slit mirror 200 can be disposed at an angle of 30 degrees, 60 degrees, or the like with respect to the main surfaces of the first and second retroreflective members 210A and 210B. In this case, the structure of the retroreflective member having the highest light utilization efficiency is designed such that the arrangement pitches of the double-sided slit mirror and the retroreflective member (that is, the arrangement pitches of the mirrors and the slits in the row direction and the arrangement pitches of the retroreflective units in the row direction) coincide with each other when the double-sided slit mirror and the retroreflective member are projected on a plane perpendicular to a designed light beam axis of the aerial image.

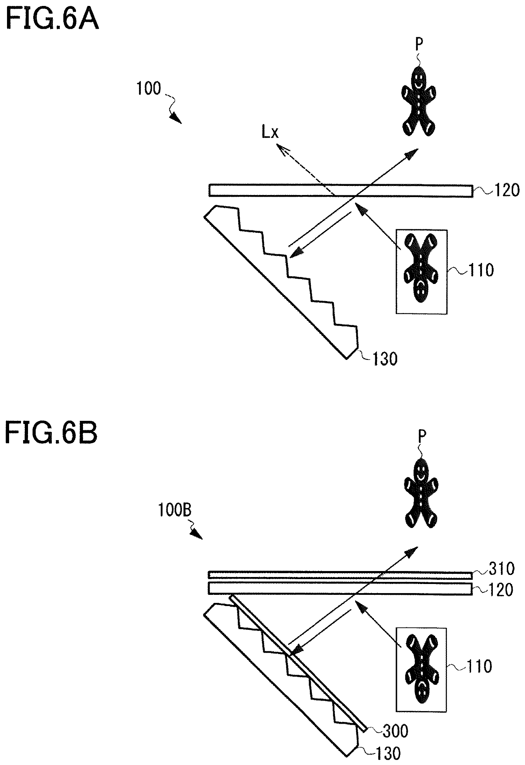

Next, a third embodiment of the present disclosure will be described. FIG. 6B is a diagram illustrating a schematic configuration of a display apparatus according to the third embodiment, and the same reference numerals are given to the same components as those illustrated in FIG. 2A.

In the first embodiment, the slit mirror 120 is used as an imaging element in order to solve the issues of light loss due to the use of the half mirror and the color dispersion due to the use of the polarizing beam splitter (polarizing reflection plate). In this case, as illustrated in FIG. 6A, a part of the light emitted from the display 110 is light Lx transmitted through the slit 124 of the slit mirror 120, and when the light Lx does not contribute to the formation of the aerial image and is noticeable as internal stray light, there is a concern that the issue of the internal stray light suppressed by using the polarizing beam splitter may be exacerbated.

In the third embodiment, therefore, an absorptive polarizing plate 310 is disposed on the upper surface of the slit mirror 120 to absorb light (polarized light in the case of a general liquid crystal display (LCD)) emitted from the display 110 that serves as a light source, thereby blocking the display 110 and the internal stray light from each other and thus making the display 110 difficult to be seen from the outside. At the same time, since it is necessary to transmit the light forming the aerial image P, a λ/4 plate 300 is installed on the surface of the retroreflective member 130 to change the polarization direction of the light for formation of the aerial image P, thereby forming the aerial image without image loss. By using the slit mirror 120 and the absorptive polarizing plate 310 in combination, a function equivalent to a polarizing reflection plate in a display apparatus for displaying an aerial image is achieved.

The λ/4 plate 300 is an optical member that causes a phase difference of λ/4 between incident light and emitted light, and is, for example, a retardation film attached to the surface of the retroreflective member 130. For example, when linearly polarized light oscillating in a certain direction is incident on the λ/4 plate 300, the λ/4 plate 300 emits light converted into circularly polarized light, or when circularly polarized light is incident on the λ/4 plate 300, the λ/4 plate 300 emits light converted into linearly polarized light.

The absorptive polarizing plate 310 is an absorptive polarizing plate, selectively transmits a linearly polarized light component that oscillates in a certain direction, and absorbs a linearly polarized light component that is orthogonal to the linearly polarized light component. Therefore, the light output from the λ/4 plate 300 is only the polarized component that has passed through the λ/4 plate 300 without being absorbed. The absorptive polarizing plate is, for example, a polarizing film attached to the upper surface side of the slit mirror 120. The direction of the linearly polarized light absorbed by the absorptive polarizing plate 310 substantially coincides with the direction of the linearly polarized light emitted from the display 110.

An operation of a display apparatus 100B according to the third embodiment will be described. As illustrated in FIG. 6B, the light emitted from the display 110 is separated into reflected light and transmitted light by the slit mirror 120. The light transmitted through the slit mirror 120 is mostly absorbed by the absorptive polarizing plate 310. In contrast to this, the light reflected by the slit mirror 120 travels toward the retroreflective member 130, passes through the λ/4 plate 300 twice, and travels toward the slit mirror 120 again. The retroreflected light is given a phase difference of λ/2 by the λ/4 plate 300, that is, the polarization direction is rotated by 90 degrees. Thus, the retroreflected light passes through the absorptive polarizing plate 310 via the slits 124 of the slit mirror 120, and forms the aerial image P.

As described above, the original image and the internal scattering of light in the display 110 can be made to be not appreciably seen by using the absorptive polarizing plate and the λ/4 plate, and as a result, the visibility of the aerial image P can be enhanced. Furthermore, by combining the λ/4 plate, the slit mirror, and the absorptive polarizing plate, the same function as that of a polarizing beam splitter (reflective polarizing plate) can be added. Furthermore, since the reflective polarizing plate is expensive, the cost of the display apparatus of the present embodiment can be reduced. Furthermore, since the reflective polarizing plate has low durability against high temperature and high humidity, the display apparatus of the present embodiment can be readily mounted on a vehicle exposed to a high temperature environment.

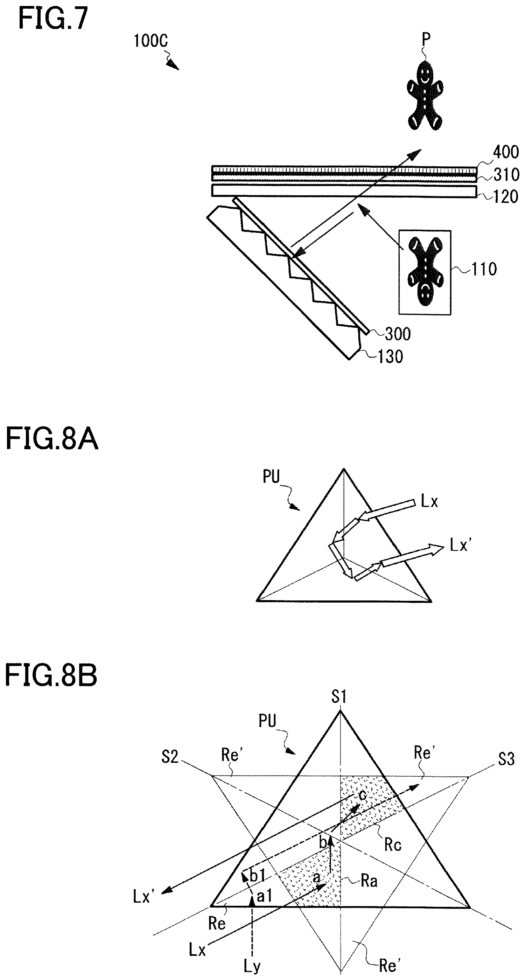

Next, a fourth embodiment of the present disclosure will be described. FIG. 7 is a diagram illustrating a schematic configuration of a display apparatus according to the fourth embodiment, and the same reference numerals are given to the same components as those illustrated in FIG. 6B. A display apparatus 100C according to the fourth embodiment includes a decorative printing 400 on the upper surface side of the absorptive polarizing plate 310 in addition to the display apparatus 100B according to the third embodiment. The decorative printing 400 is a design having the same arrangement pitch and the same width as the slits 124 of the slit mirror 120, and is printed on the surface of the absorptive polarizing plate 310. That is, the decorative printing 400 is laminated to overlap with the slits 124 of the slit mirror 120, and the light transmitted through the absorptive polarizing plate 310 is transmitted through the decorative printing 400.

As described above, according to the present embodiment, by adding decorative printing, it is possible to make the original image of the display invisible from the outside without degrading the design. Furthermore, by stacking a slit mirror, an absorptive polarizing plate, and decorative printing on top of another, a stealth aerial interface with high light utilization efficiency and less internal stray light is enabled.

In the above example, the decorative printing 400 is performed on the surface of the absorptive polarizing plate 310, but the present disclosure is not limited thereto, and a decorative film may be attached to the surface of the absorptive polarizing plate 310. The decorative printing may be formed to cover the entire surface of the absorptive polarizing plate 310. Furthermore, in a configuration in which the absorptive polarizing plate is not used, decorative printing or a decorative film may be laminated on the slit mirror or the double-sided slit mirror .

Next, a fifth embodiment of the present disclosure will be described. The fifth embodiment relates to a display apparatus in which the arrangement of the mirrors and slits in the slit mirror (repetition of the mirror and the slit of the slit mirror) is N times or 1/N times ("N" is a positive integer) with respect to the retroreflective unit (retroreflective element).

FIG. 8A is a perspective view illustrating retroreflection when the retroreflective unit has a prism shape. As illustrated in the figure, a prism PU is a triangular pyramid having right-angled triangular faces orthogonal to each other, and the incident light Lx is refracted on an incident face, then reflected three times inside, and emitted as light Lx' in the same direction as the incident light Lx.

FIG. 8B is a schematic plan view for explaining the light utilization efficiency of the prism. In FIG. 8B, S1, S2, and S3 are inversion axes, Ra and Rb are areas that are effectively used by the prism PU, Re is an area that is not effectively used by the prism PU, and Re' is an area to which light reflected by the area Re is directed.

The light Lx incident from the direction indicated by a solid line is sequentially reflected by a, b, and c of the prism PU, and is emitted as light Lx' parallel to the light Lx. The light reflected by an area Ra is finally reflected by an area Rc and used for retroreflection. In contrast to this, light Ly incident from the direction indicated by a broken line is sequentially reflected by a1 and b1 in the prism PU, but there is no reflective area of the prism in the direction in which the light reflected by the b1 travels, and thus the light is not used for retroreflection. When prisms are used in the retroreflective unit, less than half of the light is effectively used as retroreflective light, and the light utilization efficiency is maximized when the arrangement pitch of the prisms is matched with the arrangement pitch of the mirrors and slits in the slit mirror (the arrangement pitch at which the slits and the mirrors of the slit mirror are repeated).

In the fifth embodiment, any retroreflective member such as a prism shape (triangular pyramid shape) or a full-cube shape can be used, but in the following, an aerial imaging apparatus in which a full-cube type retroreflective element and a slit mirror are combined, and which is non-polarized and has high light utilization efficiency will be exemplified. The light utilization efficiency is maximized by aligning the row direction in the slit mirror with the direction of the inversion axis of the retroreflective member and making the arrangement pitch of the mirrors and slits in the slit mirror and the arrangement pitch of the retroreflective units the same, but the arrangement pitch of the retroreflective units is not necessarily the same as the arrangement pitch of the mirrors and slits in the slit mirror, and may be 1/N times the arrangement pitch of the mirrors and slits in the slit mirror. In contrast to the above, when the retroreflective element is enlarged to increase the resolution of an aerial image, the size of the retroreflective element may be N times the size of the slit mirror.

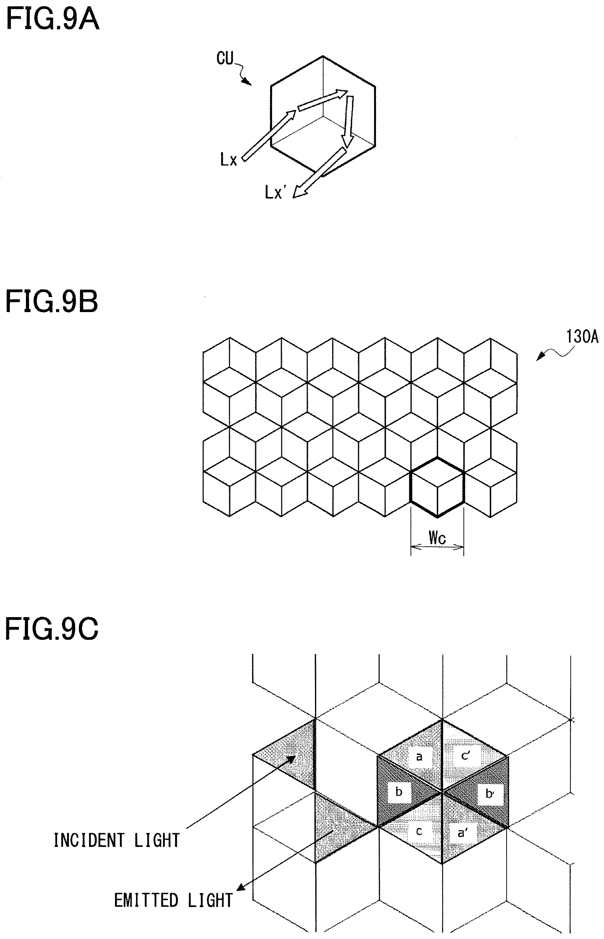

FIG. 9A is a perspective view illustrating retroreflection when the retroreflective unit (retroreflective element) has a corner cube shape. As illustrated in FIG. 9A, the corner cube CU is a trihedron in which three rectangular planes are combined to be orthogonal to each other, and the incident light Lx is reflected three times by each of the three mirror surfaces, and then emitted as light Lx' in the same direction as the incident light Lx.

FIG. 9B is a plan view of a full-cube retroreflective member in which corner cubes are arranged. A retroreflective member 130A is formed by arranging corner cubes CU two dimensionally in a honeycomb shape. The planar shape of the corner cube CU when viewed from the front is a regular hexagon, and the width of the corner cube CU in the row direction is Wc.

FIG. 9C is a plan view illustrating the relationship between incident light and emitted light in a full-cube retroreflective member. The areas a and a', the areas b and b', and the areas c and c' indicate the correspondence relationship between the incident light and the emitted light or between the emitted light and the incident light. For example, the light incident on the area a is emitted from the area a', the light incident on the area b is emitted from the area b', and the light incident on the area c is emitted from the area c'.

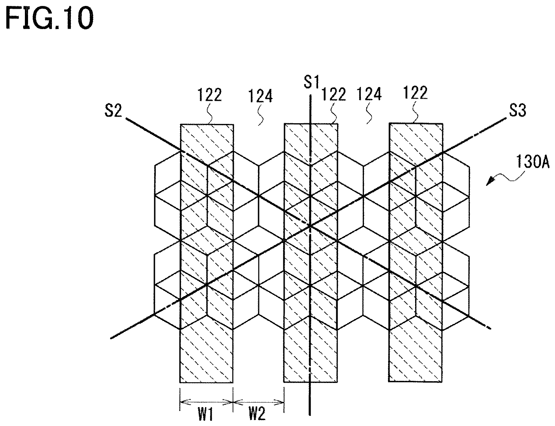

FIG. 10 is a projection view of the slit mirror 120 used in the first embodiment and the retroreflective member 130A superimposed on each other, and S1, S2, and S3 are inversion axes when light is reflected to symmetrical positions. The slit mirror 120 is configured such that the mirrors 122 extending in the column direction and the slits 124 extending in the column direction are alternately arranged, and width W1 of the mirrors 122 in the row direction are equal to width W2 of the slits 124 in the row direction (W1 = W2). The slit mirror 120 is positioned with respect to the retroreflective member 130A such that one of the inversion axes S1, S2, or S3 of the retroreflective member 130A is parallel to the row direction (slit direction) of the slit mirror 120. In the example as illustrated in FIG. 10, the slit mirror 120 is positioned with respect to the inversion axis S1 such that the inversion axis S1 is parallel to the slit direction of the slit mirror 120. At this time, the width Wc of the corner cube CU has a relationship of Wc = 1/2(W1 + W2). In other words, the arrangement pitch of the corner cubes CU in the row direction is 1/2 of the arrangement pitch of the mirrors 122 and slits 124 in the slit mirror 120 (the arrangement pitch when the mirrors and the slits of the slit mirror 120 are repeated in the row direction).

In the configuration in which the arrangement pitch of the corner cubes CU is 1/N times the arrangement pitch of the mirrors 122 and slits 124 in the slit mirror 120, it was found that the light utilization efficiency is highest when the arrangement pitch of the corner cubes CU is 1/2 times the arrangement pitch of the mirrors 122 and slits 124 in the slit mirror 120, as illustrated in FIG. 10.

In contrast to this, when it is desired to increase the resolution of the aerial image, the size of the retroreflective unit is increased by N times with respect to the slit width, whereby the diffraction by the retroreflective structure can be reduced, and as a result, the resolution of the aerial image can be enhanced.

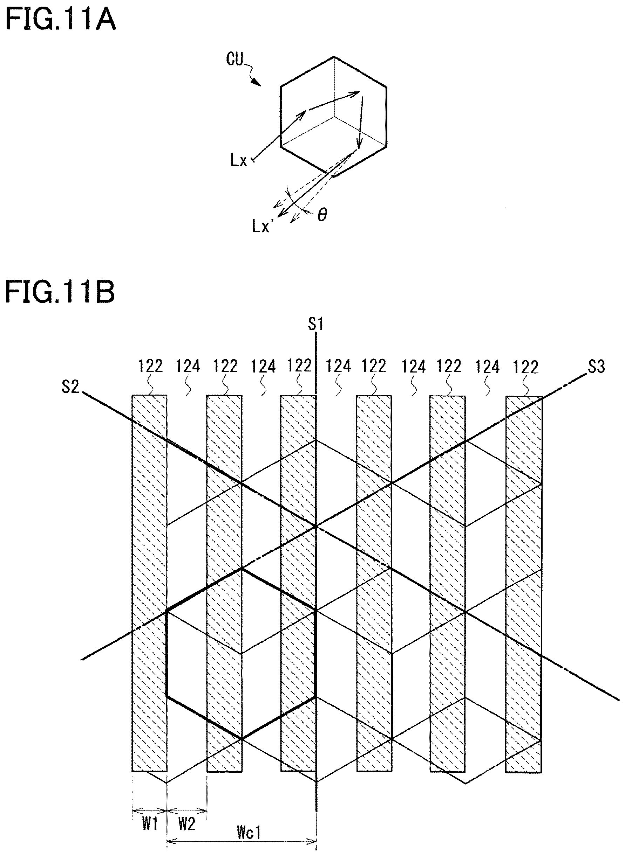

In an actual corner cube, since the size of an opening (incident surface) is finite, as illustrated in FIG. 11A, the light Lx' reflected by the corner cube CU spreads due to diffraction. A diffraction angle θ is θ = λ/D ("λ" is the wavelength and "D" is the opening). Therefore, the larger the corner cube CU is, the smaller the diffraction angle θ is.

When the light Lx' reflected by the corner cube CU passes through the slit, a plane wave becomes a spherical wave, and the light Lx' is also spread by diffraction. In order to enhance the ability to hide an inner side of the display apparatus, it is desirable to reduce the slit width of the slit mirror 120, but when the slit width is reduced, the spread angle due to diffraction increases (θ = λ/D), and the resolution of the aerial image decreases. In contrast to this, when the slit width is too large, for example, deterioration in the formed aerial image, such as the lines in the formed aerial image are not connected, occurs.

In order to increase the ability to hide the inner side of the display apparatus while increasing the resolution of the aerial image, it is assumed that the structure of the retroreflective unit is increased while the arrangement pitch of the mirrors and slits in the slit mirror is kept narrow. In this case, the light utilization efficiency is high when the arrangement pitch of the retroreflective structure is N times the arrangement pitch of the mirrors and slits in the slit mirror.

FIG. 11B is a diagram illustrating an example in which the arrangement pitch of the corner cubes is twice as large as that of the mirrors 122 and slits 124 in the slit mirror 120. The slit mirror 120 has a pattern in which mirrors 122 extending in the row direction and slits 124 extending in the row direction are repeated in the row direction. Each mirror 122 has the width W1, each slit 124 has the width W2, and W1 = W2. The corner cube has a width Wc1 in the row direction, and Wc1 = 2(W1 + W2).

The width Wc1 of each corner cube as illustrated in FIG. 11B is four times the width Wc of the corner cube as illustrated in FIG. 10. By making the corner cubes larger, the widening of the light Lx' reflected by the corner cube due to diffraction is suppressed, and by making the widths of the slits 124 to W2, the ability to hide the inner side of the display apparatus is maintained while suppressing the widening of the light Lx' due to diffraction. As a result, it is possible to obtain a high-resolution aerial image with a large floating distance.

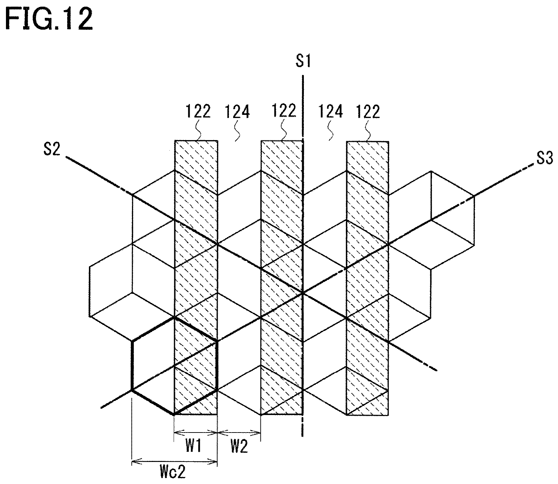

Although the above examples show examples in which the arrangement pitch of the retroreflective units is 1/N times or N times the arrangement pitch of the mirrors and slits in the slit mirror, the arrangement pitch of the retroreflective units may be matched with the arrangement pitch of the mirrors and slits in the slit mirror. FIG. 12 is a diagram illustrating an example in which the arrangement pitch of the mirrors and slits in the slit mirror is matched with the arrangement pitch of the corner cubes. The slit mirror 120 has a pattern of the mirror width W1 and the slit width W2 (W1 = W2), and the corner cube has a width Wc2 in the row direction, and the relationship Wc2 = W1 + W2 is satisfied. The display apparatus of the present embodiment has the features of the display apparatuses as illustrated in FIGS. 10 and 11B to achieve a certain degree of resolution in the aerial image and the ability to hide the inner side of the display apparatus while obtaining a certain degree of light utilization efficiency.

In the fifth embodiment, the arrangement pitch of the corner-cube-type retroreflective units is set to 1/N times or N times, but this is only an example, and the present disclosure can be similarly applied to a prism type (triangular pyramid) retroreflective element other than the corner cube type. In the fifth embodiment, for the slit mirror, the example in which the mirror width W1 and the slit width W2 are equal to each other is described, but this is an example, and the mirror width W1 and the slit width W2 may not necessarily be equal to each other (W1 ≠ W2). For example, the mirror width W1 may be larger than the slit width W2, or the mirror width W1 may be smaller than the slit width W2.

Furthermore, the fifth embodiment may be used alone in the present disclosure, but the fifth embodiment can be combined with the second embodiment, the third embodiment, and the fourth embodiment. For example, the slit mirror used in the fifth embodiment may be replaced with the double-sided slit mirror, the absorptive polarizing plate may be provided on the upper surface of the slit mirror of the fifth embodiment, or decorative printing or the decorative film may be laminated on the upper surface of the fifth slit mirror or the upper surface of the absorptive polarizing plate.

According to the present disclosure, the efficiency of use of light contributing to formation of an aerial image can be enhanced as compared with the existing technique. Furthermore, according to the present disclosure, it is possible to suppress color dispersion of an aerial image as compared with the existing technique.

Although embodiments of the present invention have been described in detail above, the present invention is not limited to the specific embodiments, and various modifications can be made within the scope of the claims.

## Claims

1. A display apparatus capable of displaying an aerial image by utilizing retroreflection, the display apparatus comprising:
a light source;
a retroreflective member; and
an optical element disposed at a position where light from the light source is incident, the optical element including a plurality of reflective areas formed via a plurality of slits, wherein
the plurality of reflective areas reflect the light from the light source toward the retroreflective member, and
the plurality of slits transmit light retroreflected by the retroreflective member to form an aerial image.

2. The display apparatus according to claim 1, wherein
each of the plurality of reflective areas is an elongated area extending in a column direction, and each of the plurality of slits is a light transmissive area formed between adjacent reflective areas of the plurality of reflective areas and configured to transmit light.

3. The display apparatus according to claim 1 or 2, wherein
the retroreflective member is positioned with respect to the optical element such that retroreflected light is transmitted through the light transmissive area.

4. The display apparatus according to one of claims 1 to 3, wherein
the retroreflective member includes a plurality of inversion axes for inverting incident light into reflected light, and
the retroreflective member is disposed such that one of the inversion axes is parallel to a slit direction of the optical element.

5. The display apparatus according to one of claims 1 to 4,
wherein
upon the retroreflective member being projected on the optical element, an arrangement pitch in a row direction of retroreflective units arranged in row and column directions of the retroreflective member coincides with an arrangement pitch of the reflective areas and the slits in the row direction of the optical element.

6. The display apparatus according to one of claims 1 to 5, wherein
a width of a retroreflective unit in the row direction, the retroreflective unit being from among the retroreflective units, is equal to a width of a reflective area and a width of a slit of the optical element, the reflective area being from among the reflective areas and the slit being from among the slits, in the row direction.

7. The display apparatus according to one of claims 1 to 6,
wherein
upon the retroreflective member being projected on the optical element, an arrangement pitch in a row direction of retroreflective units which are arranged in row and column directions of the retroreflective member is 1/N times or N times ("N" is an integer of 2 or greater) an arrangement pitch of the reflective areas and the slits in the row direction of the optical element.

8. The display apparatus according to one of claims 1 to 7, wherein
the retroreflective member includes a first retroreflective member and a second retroreflective member which are disposed to be orthogonal to each other,
the optical element includes a plurality of reflective areas disposed on both surfaces of the optical element,
the plurality of reflective areas on a bottom surface side of the optical element reflect light from the light source toward the first retroreflective member, and the plurality of slits transmit light from the light source toward the second retroreflective member, and
the plurality of reflective areas on an upper surface side of the optical element reflect light retroreflected by the second retroreflective member to form the aerial image.

9. The display apparatus according to one of claims 1 to 8,
wherein
both the first retroreflective member and the second retroreflective member include a plurality of inversion axes for inverting incident light into reflected light, and
the first retroreflective member and the second retroreflective member are arranged such that one of the inversion axes is parallel to a slit direction of the optical element.

10. The display apparatus according to one of claims 1 to 9,
wherein
upon the first retroreflective member and the second retroreflective member being projected on the optical element, an arrangement pitch in a row direction of retroreflective units arranged in row and column directions in both the first retroreflective member and the second retroreflective member coincides with the arrangement pitch in the row direction of the reflective areas and the slits of the optical element.

11. An optical element for forming an aerial image by using retroreflection, the optical element comprising:
a plurality of reflective areas formed with a plurality of slits arranged between the reflective areas.

12. The optical element according to claim 11, wherein
each of the plurality of reflective areas is an elongated area extending in a column direction, and each of the plurality of slits is a light transmissive area formed between adjacent reflective areas of the plurality of reflective areas and configured to transmit light.

13. The optical element according to claim 11 or 12, wherein
the optical element includes a transparent base member that transmits light, and
each of the plurality of reflective areas is formed on a first surface of the transparent base member.

14. The optical element according to one of claims 11 to 13, further comprising:
the plurality of reflective areas on a second surface opposite to the first surface, wherein
an arrangement pitch of the plurality of reflective areas formed on the second surface is the same as the arrangement pitch of the plurality of reflective areas formed on the first surface.

15. A method for displaying an aerial image, comprising:
preparing an optical element in which a plurality of reflective areas are formed with a plurality of slits arranged between the reflective areas;
reflecting light incident from a light source toward a retroreflective member by the plurality of reflective areas; and
transmitting the light retroreflected by the retroreflective member through the plurality of slits to form an aerial image,
or
preparing an optical element including a first surface on which a first plurality of reflective areas are formed with a first plurality of slits arranged between the reflective areas and a second surface opposite to the first surface on which a second plurality of reflective areas are formed with a second plurality of slits arranged between the reflective areas, an arrangement pitch of the first plurality of reflective areas being equal to an arrangement pitch of the second plurality of reflective areas;
reflecting light incident from a light source toward a first retroreflective member by the first plurality of reflective areas;
transmitting light retroreflected by the first retroreflective member through the first plurality of slits to form an aerial image;
transmitting the light incident from the light source toward a second retroreflective member through the first plurality of slits; and
causing the light retroreflected by the second retroreflective member to be reflected by the second plurality of reflective areas to form the aerial image.
